# EUROPÄISCHE PATENTSCHRIFT

(11) **EP 1 320 437 B1**
(45) Veröffentlichungstag und Bekanntmachung des Hinweises auf die Patenterteilung: **28.03.2007**
(21) Anmeldenummer: 01962575.5
(22) Anmeldetag: 19.07.2001
(51) Int. Cl.: B23D 51/02

(54) **SÄGE MIT EINEM WERKZEUGFÜHRUNGSMECHANISMUS MIT AUF WERKSTÜCKSTÄRKE EINSTELBAREN FÜHRUNGSELEMENTEN**
SAW WITH A TOOL GUIDANCE MECHANISM WITH GUIDE ELEMENTS ADJUSTABLE TO THE TOOL SIZE
SCIE EQUIPEE D'UN MECANISME DE GUIDAGE D'OUTIL COMPRENANT DES ELEMENTS DE GUIDAGE QUI PEUVENT ETRE REGLES EN FONCTION DE L'EPAISSEUR DE L'OUTIL

(30) Priorität: 16.09.2000 DE 10045890
(43) Veröffentlichungstag der Anmeldung: 25.06.2003
(73) Patentinhaber: ROBERT BOSCH GMBH, 70442 Stuttgart (DE)
(72) Erfinder: HECHT, Joachim, 71106 Magstadt (DE); WURST, Klaus, 70771 Leinfelden-Echterdingen (DE); JONAS, Stephan, 70195 Stuttgart (DE); KEUSCH, Siegfried, 73779 Deizisau (DE)
(74) Vertreter: Daub, Thomas
(86) Internationale Anmeldenummer: PCT/DE2001/002716
(87) Internationale Veröffentlichungsnummer: WO 2002/022297

(56) Entgegenhaltungen:
- DE-A- 19 804 706
- DE-A- 19 828 888
- DE-U- 8 507 818
- DE-U- 29 910 173
- US-A- 4 972 746

## Beschreibung

### Stand der Technik

Die Erfindung geht aus von einer Säge mit einem Werkzeugführungsmechanismus nach dem Oberbegriff des Anspruchs 1.

Eine Solche Vorrichtung ist aus DE 8507818 U1 bekannt.

Aus der DE 299 10 173 U1 ist eine gattungsbildende Säge bekannt, und zwar eine handgeführte Stichsäge. Die Stichsäge besitzt eine Antriebseinheit, an der ein Sägetisch befestigt ist. Über die Antriebseinheit ist ein Sägeblatt periodisch mit einer Auf- und Abbewegung antreibbar. Das Sägeblatt ist mit einem Ende in der Antriebseinheit befestigt und erstreckt sich ausgehend von der Antriebseinheit senkrecht zu einer Arbeitsrichtung nach unten durch den Sägetisch und ragt mit seinem freien Ende über den Sägetisch hinaus.

Um zu vermeiden, daß das Sägeblatt aufgrund der beim Sägevorgang auftretenden Querkräfte seitlich ausweicht, wie insbesondere beim Schneiden von Radien, ist ein Werkzeugführungsmechanismus vorgesehen. Der Werkzeugführungsmechanismus besitzt zwei seitlich zum Sägeblatt angeordnete Tragarme, an denen sogenannte Stabilisierungselemente bzw. Führungselemente befestigt sind, die seitlich am Sägeblatt anliegen und dieses seitlich führen. Die Tragarme sind über eine Verstellschraube miteinander verbunden, so daß ein Abstand zwischen den Führungselementen von einem Bediener manuell auf eine Sägeblattstärke eingestellt werden kann. An den Tragarmen ist ferner ein Sicherungsbügel befestigt, der dem Sägeblatt in Bearbeitungsrichtung vorgelagert ist und einen Berührschutz bildet.

### Vorteile der Erfindung

Diese Aufgabe wird erfindungsgemäß durch die Merkmale des Anspruchs 1 gelöst. Weitere vorteilhafte Ausführungsformen sind den abhängigen Ansprüchen 2 bis 13 zu entnehmen.

Die Erfindung geht aus von einer Säge, insbesondere von einer handgeführten Stichsäge, die eine Antriebseinheit aufweist, über die ein Werkzeug, insbesondere ein Sägeblatt, antreibbar ist, und mit einem Werkzeugführungsmechanismus, über die das Werkzeug mit Führungselementen seitlich führbar ist.

Es wird vorgeschlagen, daß der Werkzeugführungsmechanismus einen Stellmotor aufweist, über den ein Abstand zwischen den Führungselementen auf eine Werkzeugstärke einstellbar ist. Der Komfort kann gesteigert werden, und zwar insbesondere wenn über den Stellmotor der Werkzeugführungsmechanismus automatisch eingestellt wird, sobald ein neues Werkzeug in der Säge befestigt ist. Der Stellmotor könnte jedoch auch grundsätzlich durch eine manuelle Betätigung, beispielsweise eines Schalters, aktiviert werden. Ferner kann mit einer automatischen Einstellung stets eine vorteilhafte Führungseinstellung und ein damit verbundenes optimales Sägeergebnis sichergestellt werden. Eine Falscheinstellung ist vermeidbar.

Der Stellmotor kann einen elektrischen, elektromagnetischen, pneumatischen, hydraulischen, chemischen und/oder biochemischen Antrieb mit einem linear bewegten und/oder einem rotierend bewegten Abtrieb aufweisen usw. Besonders vorteilhaft besitzt der Stellmotor jedoch einen Federantrieb, wodurch dieser besonders konstruktiv einfach, kostengünstig und robust ausgeführt werden kann.

Ein ungewünschtes Öffnen des Werkzeugführungsmechanismus kann durch verschiedene, dem Fachmann als sinnvoll erscheinende kraftschlüssige und/oder formschlüssige Mechanismen erreicht werden, wie beispielsweise durch einen Rastmechanismus, der einrastet, sobald eine gewünschte Stellung erreicht ist, wobei die gewünschte Stellung wiederum durch verschiedene Sensoren erfaßt werden kann, wie durch optische, mechanische und/oder elektrische Sensoren usw. Grundsätzlich ist auch denkbar, die Schließkräfte des Stellmotors größer auszuführen als die üblicherweise auftretenden Querkräfte im Betrieb.

Ist jedoch der Werkzeugführungsmechanismus nach einem Einstellvorgang durch einen kraftschlüssigen, auf einer Selbsthemmung beruhenden Klemmechanismus in seiner Schließstellung gehalten, kann konstruktiv einfach und kostengünstig mit wenigen Bauteilen und geringem zusätzlichen Gewicht eine stufenlose Einstellung erreicht und ein ungewünschtes Öffnen des Werkzeugführungsmechanismus sicher vermieden werden. Insbesondere bei einem Stellmotor mit einem Federantrieb können die Federelemente klein, leicht und kostengünstig ausgeführt und eine hohe Reibung kann infolge einer hohen kontinuierlichen Anpreßkraft der Führungselemente des Werkzeugführungsmechanismus auf das Werkzeug vermieden werden. Die Selbsthemmung kann durch ein Gewinde, beispielsweise einer von einem Elektromotor angetriebenen Stellschraube, oder von einem anderen, mit einer Schrägfläche korrespondierenden Bauteil erreicht werden usw.

In einer weiteren Ausgestaltung der Erfindung wird vorgeschlagen, daß der Werkzeugführungsmechanismus über ein Gelenk verbundene Schwenkarme aufweist, an denen Führungselemente angeordnet sind, wodurch konstruktiv einfach und platzsparend mit einem Stellmotor eine symmetrische Zustellung der Führungselemente von zwei Seiten auf das Werkzeug erreicht werden kann. Sind die Schwenkarme über Schrägflächen in ihrer Schwenkbewegung antreibbar, kann eine gewünschte Selbsthemmung in Öffnungsrichtung des Werkzeugführungsmechanismus einfach realisiert werden.

Ferner wird vorgeschlagen, daß die Schrägflächen von einem verschiebbar gelagerten Lagerbauteil gebildet sind, das einen Teil des Stellmotors bildet und in Richtung seiner Schließstellung über zumindest ein Federelement belastet ist, und das zum Öffnen des Werkzeugführungsmechanismus über ein Bedienelement einer Bedienvorrichtung aus seiner Schließstellung in eine Öffnungsstellung verschiebbar ist. Die Selbsthemmung kann durch einen Bediener einfach gelöst und ein konstruktiv einfacher Werkzeugführungsmechanismus mit wenigen zusätzlichen Bauteilen kann erreicht werden.

Sind die Führungselemente auf einer ersten Seite des Gelenks der Schwenkarme angeordnet und ist der Stellmotor auf einer zweiten Seite des Gelenks angeordnet, kann der Bauraum vorteilhaft ausgenutzt und der Stellmotor kann verdeckt in einem Gehäuse der Säge und dadurch geschützt vor äußeren Einflüssen angeordnet werden. Ferner kann eine Sichtbeeinträchtigung auf das Werkzeug und das Werkstück durch den Stellmotor vermieden werden.

Sind die Schwenkarme des Werkzeugführungsmechanismus in Bearbeitungsrichtung dem Werkzeug vorgelagert, so können diese vorteilhaft eine Schutzvorrichtung bzw. einen Berührschutz bilden. Zusätzliche Bauteile, Gewicht, Montageaufwand und Kosten für eine entsprechende Schutzvorrichtung können vermieden werden.

Der Einstellvorgang des Werkzeugführungsmechanismus findet in der Regel nach einem Werkzeugwechsel statt. Ist eine Bedienvorrichtung zum Öffnen des Werkzeugführungsmechanismus mit einer Bedienvorrichtung eines Befestigungsmechanismus des Werkzeugs zumindest wirkungsmäßig gekoppelt, und zwar in der Weise, daß beim Öffnen des Befestigungsmechanismus gleichzeitig der Werkzeugführungsmechanismus geöffnet wird, können von einem Bediener durchzuführende Betätigungsvorgänge vermieden und der Komfort kann weiter gesteigert werden. Ferner können zusätzliche Bauteile eingespart werden, indem die Bedienvorrichtung zum Öffnen des Werkzeugführungsmechanismus zumindest teilweise einstückig mit der Bedienvorrichtung des Befestigungsmechanismus des Werkzeugs ausgeführt ist.

In einer weiteren Ausgestaltung der Erfindung wird vorgeschlagen, daß der Werkzeugführungsmechanismus über eine Haltevorrichtung nach einem. Entfernen des Werkzeugs in einer Öffnungsstellung haltbar ist. Ein automatisches Zustellen vor dem Einsetzen eines neuen Werkzeugs und damit ein erforderliches Öffnen zum Einsetzen eines neuen Werkzeugs kann vorteilhaft vermieden werden. Der Haltemechanismus kann nach dem Einfügen des neuen Werkzeugs manuell oder vorteilhaft automatisch durch das Einfügen des Werkzeugs gelöst werden.

Werden die Führungselemente des Werkzeugführungsmechanismus von Wälzkörpern gebildet, können eine besonders kleine Reibung, ein niedriger Leistungsverlust und ein kleiner Verschleiß erzielt werden. Um eine hohe Flächenpressung zwischen den Führungselementen und dem Werkzeug zu vermeiden, können die Wälzkörper der Kontur des Werkzeugs angepaßt oder können anpaßbar ausgeführt sein. Die Wälzkörper können von konkaven, konvexen oder zylinderförmigen Walzen oder von Kugeln usw. gebildet sein. Anstatt Wälzkörper können die Führungselemente vorteilhaft von Keramikteilen gebildet sein, die besonders verschleißfest ausführbar sind. An Keramikteile können ferner einfach Halteelemente angeformt werden, wie beispielsweise Rastelemente oder ein Gewinde usw. Grundsätzlich sind jedoch auch Führungselemente aus anderen, dem Fachmann als sinnvoll erscheinenden Materialien denkbar, wie beispielsweise aus Hartmetall usw.

Sind die Führungselemente durch lösbare Halteelemente gehalten und austauschbar, kann mit kostengünstigen Führungselementen eine lange Lebensdauer des Werkzeugführungsmechanismus erzielt werden. Ferner können Führungselemente mit guten Schmiereigenschaften verwendet werden, die neben einer Führungsfunktion das Werkzeug schmieren, wie beispielsweise Führungselemente auf einer Kohlenstoffbasis usw.

Die erfindungsgemäße Lösung kann bei verschiedenen, dem Fachmann als sinnvoll erscheinenden stationären und handgeführten Sägen angewendet werden, wie beispielsweise bei Bandsägen usw. Besonders vorteilhaft wird die erfindungsgemäße Lösung jedoch bei handgeführten Stichsägen angewendet. Bei handgeführten Stichsägen wird in der Regel häufig ein Werkzeugwechsel durchgeführt, wodurch mit der erfindungsgemäßen Lösung bei derartigen Sägen eine besonders hohe Komfortsteigerung erzielt werden kann.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematisch dargestellte Stichsäge schräg von oben,
- Fig. 2: einen vergrößert dargestellten Ausschnitt II aus Fig. 1 mit einem Werkzeugführungsmechanismus,
- Fig. 3: den Ausschnitt II schräg von vorn,
- Fig. 4: den Ausschnitt II direkt von vorn,
- Fig. 5: den Ausschnitt II schräg von vorn ohne Abdekkung,
- Fig. 6: den Werkzeugführungsmechanismus aus Fig. 2 von hinten und
- Fig. 7: einen einzelnen Schwenkarm des Werkzeugführungsmechanismus aus Fig. 2 im demontierten Zustand.

### Beschreibung des Ausführungsbeispiels

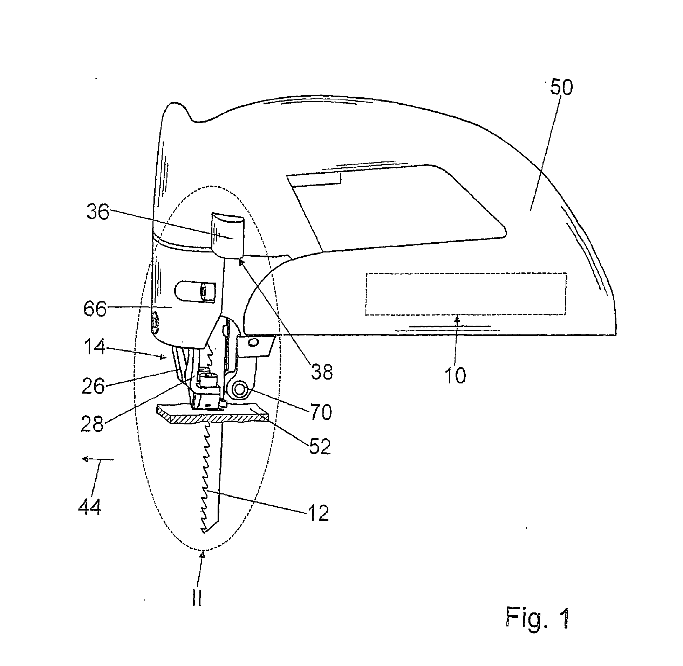

Fig. 1 zeigt eine schematisch dargestellte handgeführte Stichsäge schräg von oben, die einen in einem Gehäuse 50 angeordneten, nicht näher dargestellten Elektromotor 10 aufweist. In der Stichsäge ist ein Sägeblatt 12 befestigt, das mit einem ersten Ende im Gehäuse 50 mit einer vom Elektromotor 10 angetriebenen Getriebeeinheit fest verbunden ist und sich ausgehend vom ersten Ende senkrecht zur Bearbeitungsrichtung 44 nach unten durch einen in Fig. 1 nur angedeuteten Sägetisch 52 erstreckt. Mit dem Elektromotor 10 ist über die Getriebeeinheit das Sägeblatt 12 im wesentlichen senkrecht zu einer Bearbeitungsrichtung 44 mit einer Hubbewegung periodisch auf und ab antreibbar. Auf einer einer Arbeitsseite des Sägeblatts 12 abgewandten Seite ist das Sägeblatt 12 an eine Stützrolle 70 abgestützt, über die das Sägeblatt 12 in Bearbeitungsrichtung 44 pendelnd antreibbar ist.

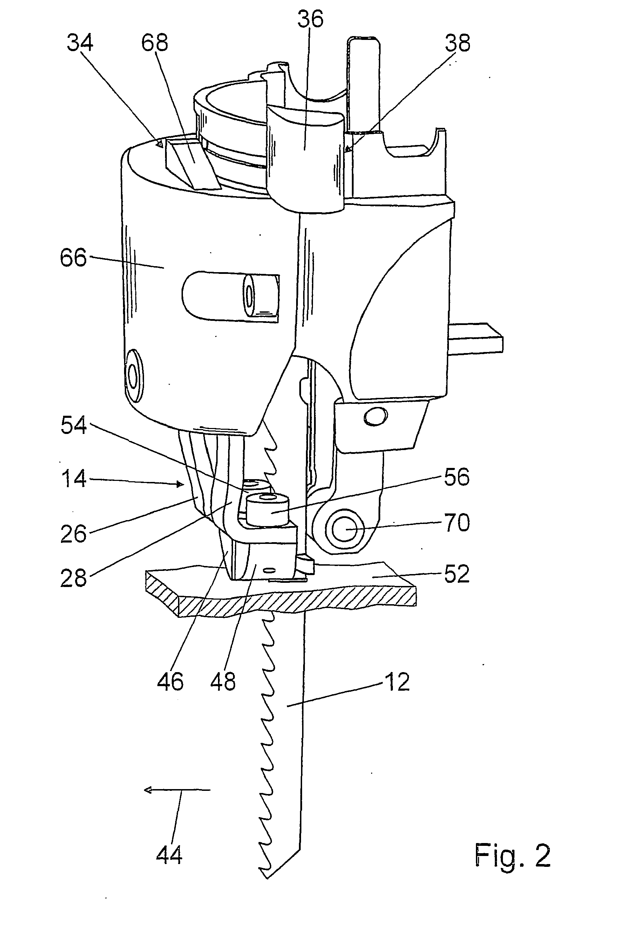

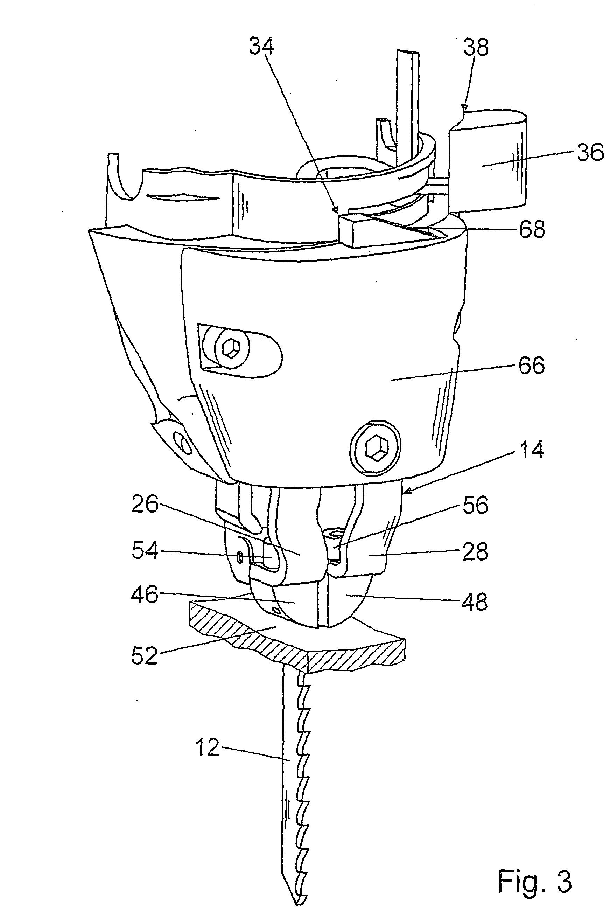

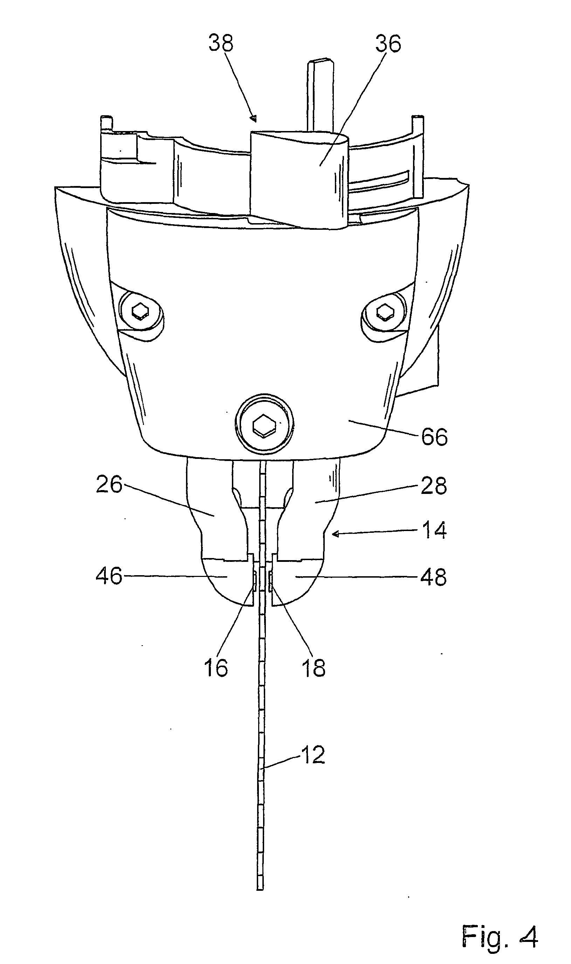

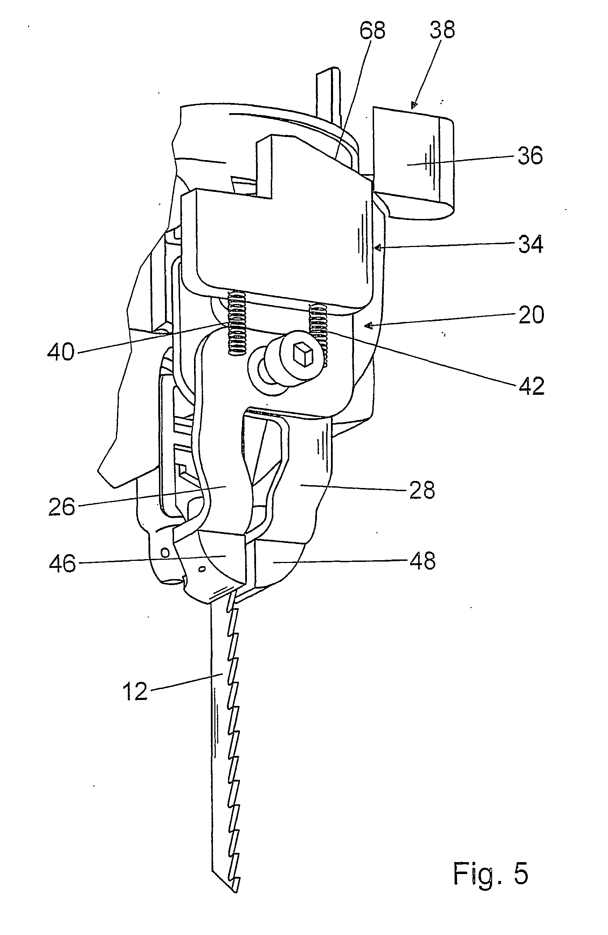

Ferner besitzt die Stichsäge einen Werkzeugführungsmechanismus 14, über den das Sägeblatt 12 mit Führungselementen 16, 18 seitlich führbar ist (Fig. 1 und 4). Erfindungsgemäß besitzt der Werkzeugführungsmechanismus 14 einen Stellmotor 20 mit einem Federantrieb, über den ein Abstand zwischen den Führungselementen 16, 18 auf eine Sägeblattstärke einstellbar ist. Der Werkzeugführungsmechanismus 14 besitzt zwei über ein Gelenk 24 verbundene Schwenkarme 26, 28, an denen an einem Ende über Halteelemente 46, 48 die aus Keramikteilen gebildeten Führungselemente 16, 18 befestigt sind (Fig. 2 bis 7). Die Schwenkarme 26, 28 bilden eine Art Führungszange. Die Führungselemente 16, 18 sind auf die Halteelemente 46, 48 aufgeklebt, die über Befestigungsschrauben 54, 56 lösbar und austauschbar an den Schwenkarmen 26, 28 befestigt sind. Die Schwenkarme 26, 28 sind in Bearbeitungsrichtung 44 dem Sägeblatt 12 vorgelagert und dienen gleichzeitig als Schutzvorrichtung bzw. als Berührschutz.

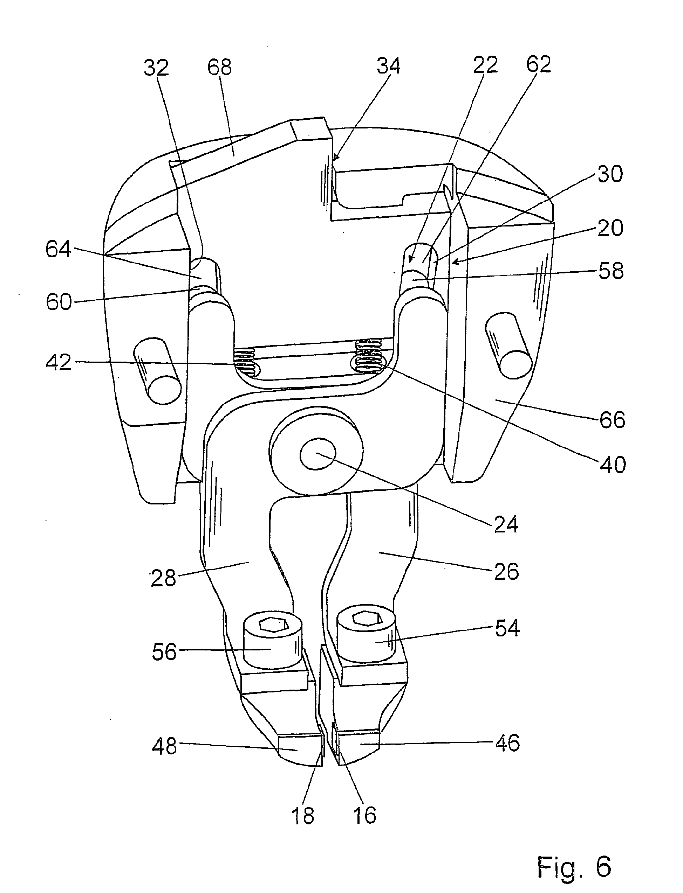

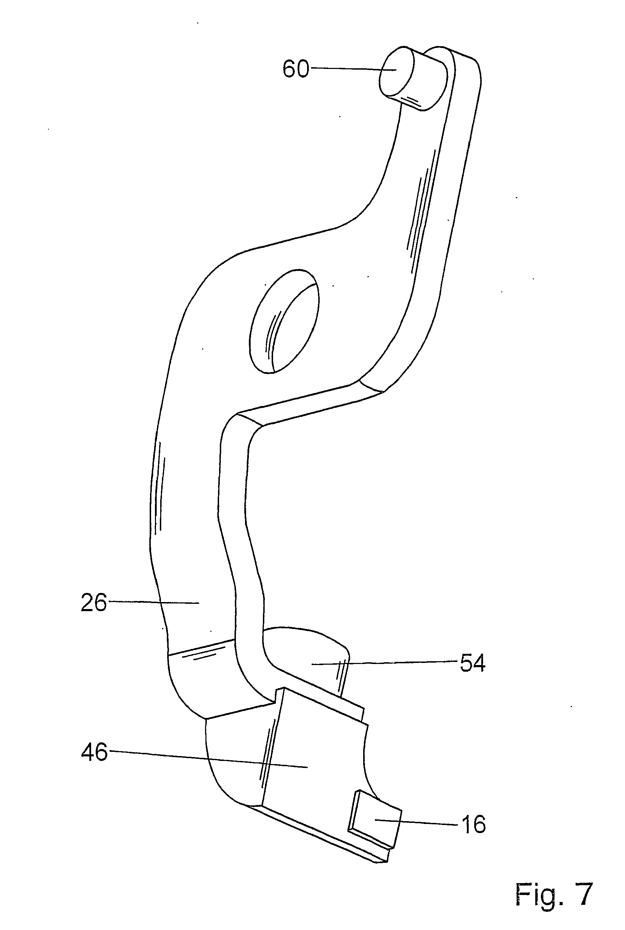

An einem zweiten Ende der Schwenkarme 26, 28 sind Führungsbolzen 58, 60 angeformt (Fig. 6 und Fig. 7). Die Führungsbolzen 58, 60 ragen in Betätigungsrichtung 44 in Nuten 62, 64 eines Lagerbauteils 34, die in Längsrichtung des Sägeblatts 12 zum Gehäuse 50 leicht schräg, mit einem Winkel kleiner als 6° auseinander laufend ausgeführt sind. Durch Schrägflächen 30, 32 des Lagerbauteils 34 in den Nuten 62, 64 sind die Schwenkarme 26, 28 in ihrer Schwenkbewegung antreibbar. Das Lagerbauteil 34 ist parallel zur Längsrichtung des Sägeblatts 12 verschiebbar gelagert und bildet einen Teil des Stellmotors 20, und zwar indem das Lagerbauteil 34 in Richtung seiner Schließstellung, in Längsrichtung des Sägeblatts 12 zum Gehäuse 50 über zwei Schraubendruckfedern 40, 42 belastet ist. Die Schraubendruckfedern 40, 42 stützten sich jeweils mit einem dem Lagerbauteil 34 abgewandten Ende an von einer Abdeckung 66 gebildeten, nicht näher dargestellten Auflageflächen ab. Der vom Lagerbauteil 34 und den Schraubendruckfedern 40, 42 gebildete Stellmotor 20 ist auf der den Führungselementen 16, 18 abgewandten Seite des Gelenks 24 hinter der Abdeckung 66 verdeckt und vor äußeren Einflüssen geschützt angeordnet.

Zum Wechseln des Sägeblatts 12 wird ein verschiebbar gelagertes Bedienelement 36 einer Bedienvorrichtung 38 des Werkzeugführungsmechanismus 14 quer zur Bearbeitungsrichtung 44 entlang einer an das Lagerbauteil 34 angeformten Schrägfläche 68 verschoben, wodurch das Lagerbauteil 34 aus seiner Schließstellung in die vom Gehäuse 50 abgewandte Längsrichtung des Sägeblatts 12 in seine Öffnungsstellung verschoben wird. Die Führungsbolzen 58, 60 werden entlang den Schrägflächen 30, 32 geführt und auseinander geschwenkt, wodurch die auf der gegenüberliegenden Seite des Gelenks 24 angeordneten Führungselemente 16, 18 ebenfalls auseinander geschwenkt werden und sich vom Sägeblatt 12 abheben.

Das Bedienelement 36 der Bedienvorrichtung 38 des Werkzeugführungsmechanismus 14 ist einstückig mit einem Bedienelement eines nicht näher dargestellten Befestigungsmechanismus des Sägeblatts 12 ausgeführt, und zwar wird durch die Verschiebung des Bedienelements 36 in Richtung der Schrägfläche 68 des Lagerbauteils 34 der Befestigungsmechanismus des Sägeblatts 12 gelöst und das Sägeblatt 12 ausgeworfen.

Solange kein neues Sägeblatt 12 in die Stichsäge eingeführt bzw. über den Befestigungsmechanismus befestigt wird, wird der Werkzeugführungsmechanismus 14 bzw. das Lagerbauteil 34 durch einen nicht näher dargestellten Rastmechanismus in seiner Öffnungsstellung gehalten, so daß durch die Führungselemente 16, 18 ein neues Sägeblatt 12 einfach in die Stichsäge bzw. in den Befestigungsmechanismus eingeführt werden kann. Ohne entsprechenden Rastmechanismus müßte das Lagerbauteil 34 zum Einführen eines neuen Sägeblatts 12 beispielsweise durch das Bedienelement 36 in seine Öffnungsstellung verschoben werden. Das Bedienelement 36 wird durch eine nicht näher dargestellte Rückstellfeder zurückgestellt.

Beim Einführen des neuen Sägeblatts 12 wird gleichzeitig mit der Befestigung des Sägeblatts 12 durch den Befestigungsmechanismus der Rastmechanismus gelöst, und das Lagerbauteil 34 wird durch die Schraubendruckfedern 40, 42 in seine Schließstellung verschoben. Die Führungsbolzen 58, 60 werden in den Nuten 62, 64 entlang der Schrägflächen 30, 32 geführt und werden aufeinander zu geschwenkt, wodurch die Führungselemente 16, 18 ebenfalls aufeinander zu geschwenkt werden und sich seitlich an das Sägeblatt 12 anlegen. Der Werkzeugführungsmechanismus 14 stellt sich automatisch auf eine entsprechende Stärke eines verwendeten Sägeblatts 12 ein, wobei ein Abstand zwischen den Führungselementen 16, 18 auf Sägeblätter mit einer Dicke zwischen 0,8 und 1,7 mm einstellbar ist.

Die Führungsbolzen 58, 60 und die Schrägflächen 30, 32 des Lagerbauteils 34 bilden einen Klemmechanismus 22, durch den die Schwenkarme 26, 28 des Werkzeugführungsmechanismus 14 nach dem Einstellvorgang durch Selbsthemmung in der Schließstellung gehalten sind.

### Bezugszeichen

- 10: Antriebseinheit
- 12: Werkzeug
- 14: Werkzeugführungsmechanismus
- 16: Führungselement
- 18: Führungselement
- 20: Stellmotor
- 22: Klemmechanismus
- 24: Gelenk
- 26: Schwenkarm
- 28: Schwenkarm
- 30: Schrägfläche
- 32: Schrägfläche
- 34: Lagerbauteil
- 36: Bedienelement
- 38: Bedienvorrichtung
- 40: Federelement
- 42: Federelement
- 44: Bearbeitungsrichtung
- 46: Halteelement
- 48: Halteelement

- 50: Gehäuse
- 52: Sägetisch
- 54: Befestigungsschraube

- 56: Befestigungsschraube
- 58: Führungsbolzen
- 60: Führungsbolzen
- 62: Nut
- 64: Nut
- 66: Abdeckung
- 68: Schrägfläche
- 70: Stützrolle

## Patentansprüche

1. Säge, insbesondere handgeführte Stichsäge, die eine Antriebseinheit (10) aufweist, über die ein Werkzeug (12), insbesondere ein Sägeblatt, antreibbar ist, und mit einem Werkzeugführungsmechanismus (14), über den das Werkzeug (12) mit Führungselementen (16, 18) seitlich führbar ist, wobei der Werkzeugführungsmechanismus (14) einen Stellmotor (20) aufweist, über den ein Abstand zwischen den Führungselementen (16, 18) auf eine Werkzeugstärke einstellbar ist, **dadurch gekennzeichnet, dass** der Werkzeugführungsmechanismus (14) über ein Gelenk (24) verbundene Schwenkarme (26, 28) aufweist, an denen die Führungselemente (16, 18) angeordnet sind.

2. Säge nach Anspruch 1, **dadurch gekennzeichnet, dass** der Stellmotor (20) einen Federantrieb aufweist.

3. Säge nach Anspruch 1 oder 2, **dadurch gekennzeichnet, dass** der Werkzeugführungsmechanismus (14) nach einem Einstellvorgang durch einen kraftschlüssigen, auf einer Selbsthemmung beruhenden Klemmechanismus (22) in seiner Schließstellung gehalten ist.

4. Säge nach Anspruch 1, **dadurch gekennzeichnet, dass** die Schwenkarme (26, 28) über Schrägflächen (30, 32) in ihrer Schwenkbewegung antreibbar sind.

5. Säge nach Anspruch 4, **dadurch gekennzeichnet, dass** die Schrägflächen (30, 32) von einem verschiebbar gelagerten Lagerbauteil (34) gebildet sind, das einen Teil des Stellmotors (20) bildet und in Richtung seiner Schließstellung über zumindest ein Federelement (40, 42) belastet ist, und das zum Öffnen des Werkzeugführungsmechanismus (14) über ein Bedienelement (36) einer Bedienvorrichtung (38) aus seiner Schließstellung in eine Öffnungsstellung verschiebbar ist.

6. Säge nach einem der Ansprüche 1 bis 5, **dadurch gekennzeichnet, dass** die Führungselemente (16, 18) auf einer ersten Seite des Gelenks (24) der Schwenkarme (26, 28) angeordnet sind, und der Stellmotor (20) auf einer zweiten Seite des Gelenks (24) angeordnet ist.

7. Säge nach einem der Ansprüche 1 bis 6, **dadurch gekennzeichnet, dass** die Schwenkarme (26, 28) des Werkzeugführungsmechanismus (14) in Bearbeitungsrichtung (44) dem Werkzeug (12) vorgelagert sind und eine Schutzvorrichtung bilden.

8. Säge nach einem der vorhergehenden Ansprüche, **dadurch gekennzeichnet, dass** eine Bedienvorrichtung (38) zum Öffnen des Werkzeugführungsmechanismus (14) mit einer Bedienvorrichtung eines Befestigungsmechanismus des Werkzeugs (12) zumindest wirkungsmäßig gekoppelt ist.

9. Säge nach Anspruch 8, **dadurch gekennzeichnet, dass** die Bedienvorrichtung (38) zum Öffnen des Werkzeugführungsmechanismus (14) zumindest teilweise einstückig mit der Bedienvorrichtung des Befestigungsmechanismus des Werkzeugs (12) ausgeführt ist.

10. Säge nach einem der vorhergehenden Ansprüche, **dadurch gekennzeichnet, dass** der Werkzeugführungsmechanismus (14) über eine Haltevorrichtung nach dem Entfernen eines Werkzeugs (12) in einer Öffnungsstellung haltbar ist.

11. Säge nach einem der vorhergehenden Ansprüche, **dadurch gekennzeichnet, dass** die Führungselemente des Werkzeugführungsmechanismus von Wälzkörpern gebildet sind.

12. Säge nach einem der Ansprüche 1 bis 10, **dadurch gekennzeichnet, dass** die Führungselemente (16, 18) des Werkzeugführungsmechanismus (14) aus Keramikteilen gebildet sind.

13. Säge nach einem der vorhergehenden Ansprüche, **dadurch gekennzeichnet, dass** die Führungselemente (16, 18) durch lösbare Halteelemente (46, 48) gehalten und austauschbar sind.

## Claims

1. Saw, in particular hand-guided jigsaw, which has a drive unit (10) by means of which a tool (12), in particular a saw blade, can be driven, and with a tool guide mechanism (14) by means of which the tool (12) can be laterally guided by guide elements (16, 18), wherein the tool guide mechanism (14) has a positioning motor (20) by means of which a distance between the guide elements (16, 18) can be set to a tool thickness, **characterized in that** the tool guide mechanism (14) has swivel arms (26, 28) which are joined through a pivot joint (24) and on which the guide elements (16, 18) are disposed.

2. Saw according to Claim 1, **characterized in that** the positioning motor (20) has a spring drive.

3. Saw according to either of Claims 1 or 2, **characterized in that**, following a setting operation, the tool guide mechanism (14) is held in its closed position by a force-closed clamping mechanism (22) that is based on self-retention.

4. Saw according to Claim 1, **characterized in that** the swivel arms (26, 28) can be driven in their swivel motion by means of oblique faces (30, 32).

5. Saw according to Claim 4, **characterized in that** the oblique faces (30, 32) are constituted by a displaceably mounted bearing component (34) which constitutes a part of the positioning motor (20) and is loaded in the direction of its closed position by means of at least one spring element (40, 42), and which, for the purpose of opening the tool guide mechanism (14), can be displaced out of its closed position into an open position by means of a control element (36) of a control device (38).

6. Saw according to any one of Claims 1 to 5, **characterized in that** the guide elements (16, 18) are disposed on a first side of the pivot joint (24) of the swivel arms (26, 28), and the positioning motor (20) is disposed on a second side of the pivot joint (24).

7. Saw according to any one of Claims 1 to 6, **characterized in that** the swivel arms (26, 28) of the tool guide mechanism (14) are forward of the tool (12) in the direction of working (44) and constitute a protective device.

8. Saw according to any one of the preceding claims, **characterized in that** a control device (38) for opening the tool guide mechanism (14) is coupled, at least operatively, to a control device of a fixing mechanism of the tool (12).

9. Saw according to Claim 8, **characterized in that** the control device (38) for opening the tool guide mechanism (14) is realized, at least partially, as a single piece with the control device of the fixing mechanism of the tool (12).

10. Saw according to any one of the preceding claims, **characterized in that**, following the removal of a tool (12), the tool guide mechanism (14) can be held in an open position by means of a holding device.

11. Saw according to any one of the preceding claims, **characterized in that** the guide elements of the tool guide mechanism are constituted by rolling elements.

12. Saw according to any one of Claims 1 to 10, **characterized in that** the guide elements (16, 18) of the tool guide mechanism (14) are constituted from ceramic parts.

13. Saw according to any one of the preceding claims, **characterized in that** the guide elements (16, 18) are held by detachable holding elements (46, 48), and are replaceable.

## Revendications

1. Scie, notamment scie à sauteuse à main présentant une unité d'entraînement (10) permettant d'entraîner un outil (12), notamment une lame, et dotée d'un mécanisme de guidage d'outil (14) permettant de guider latéralement l'outil (12) avec des éléments de guidage (16, 18), le mécanisme de guidage d'outil (14) comprenant un moteur de réglage (20) permettant de régler une distance entre les éléments de guidage (16, 18) en fonction de l'épaisseur d'un outil,
**caractérisée en ce que**
le mécanisme de guidage d'outil (14) présente des bras pivotants (26, 28) reliés par une articulation (14) et portant les éléments de guidage (16, 18).

2. Scie selon la revendication 1,
**caractérisée en ce que**
le moteur de réglage (20) présente un entraînement par ressort.

3. Scie selon la revendication 1 ou 2,
**caractérisée en ce qu'**
après une opération de réglage, le mécanisme de guidage d'outil (14) est maintenu dans sa position de fermeture par un mécanisme de serrage (22) par la force reposant sur un blocage automatique.

4. Scie selon la revendication 1,
**caractérisée en ce que**
les bras pivotants (26, 28) sont entraînés dans leur mouvement de pivotement par des surfaces inclinées (30, 32).

5. Scie selon la revendication 4,
**caractérisée en ce que**
les surfaces inclinées (30, 32) sont formées par un composant de palier (34) mobile, formant une partie du moteur de réglage (20) et sollicité par au moins un élément élastique (40, 42) dans le sens de sa position de fermeture, et pour ouvrir le mécanisme de guidage d'outil (14) le composant de palier peut être déplacé de sa position de fermeture à une position d'ouverture par un élément de commande (36) d'un dispositif de manoeuvre (38).

6. Scie selon l'une quelconque des revendications 1 à 5,
**caractérisée en ce que**
les éléments de guidage (16, 18) sont placés sur un premier côté de l'articulation (24) des bras pivotants (26, 28), et le moteur de réglage (20) est disposé sur un deuxième côté de l'articulation (24).

7. Scie selon l'une quelconque des revendications 1 à 6,
**caractérisée en ce que**
les bras pivotants (26, 28) du mécanisme de guidage d'outil (14) précèdent l'outil (12) dans le sens d'usinage (44) et forment un dispositif de protection.

8. Scie selon l'une quelconque des revendications précédentes,
**caractérisée en ce qu'**
un dispositif de manoeuvre (38) servant à ouvrir le mécanisme de guidage d'outil (14) est couplé au moins efficacement à un dispositif de manoeuvre d'un mécanisme de fixation de l'outil (12).

9. Scie selon la revendication 8,
**caractérisée en ce que**
le dispositif de manoeuvre (38) servant à l'ouverture du mécanisme de guidage d'outil (14) est réalisé au moins partiellement d'une seule pièce avec le dispositif de manoeuvre du mécanisme de fixation de l'outil (12).

10. Scie selon l'une quelconque des revendications précédentes,
**caractérisée en ce que**
le mécanisme de guidage d'outil (14) peut être maintenu dans une position d'ouverture par un dispositif d'arrêt après le retrait d'un outil (12).

11. Scie selon l'une quelconque des revendications précédentes,
**caractérisée en ce que**
les éléments de guidage du mécanisme de guidage d'outil sont formés par des organes de roulement.

12. Scie selon l'une quelconque des revendications 1 à 10,
**caractérisée en ce que**
les éléments de guidage (16, 18) du mécanisme de guidage d'outil (14) sont formés par des pièces en céramique.

13. Scie selon l'une quelconque des revendications précédentes,
**caractérisée en ce que**
les éléments de guidage (16, 18) sont maintenus par des éléments de fixation amovibles (46, 48) et peuvent être remplacés.
